Europäisches Patentamt

European Patent Office

Office européen des brevets

(11) Veröffentlichungsnummer : **0 156 972**
**B1**

(12) EUROPÄISCHE PATENTSCHRIFT

(45) Veröffentlichungstag der Patentschrift :
07.09.88

(51) Int. Cl.⁴ : **G 07 F 7/02, G 06 K 13/08**

(21) Anmeldenummer : **84114898.4**

(22) Anmeldetag : **07.12.84**

(54) Vorrichtung zum Prüfen und Entwerten einer Wertkarte in einem Kartenleser.

(30) Priorität : **26.01.84 DE 3402632**

(43) Veröffentlichungstag der Anmeldung :
**09.10.85 Patentblatt 85/41**

(45) Bekanntmachung des Hinweises auf die Patenterteilung : **07.09.88 Patentblatt 88/36**

(84) Benannte Vertragsstaaten :
**AT CH DE FR GB LI**

(56) Entgegenhaltungen :
EP-A- 0 041 261
DE-A- 3 235 654
FR-A- 2 386 080
FR-A- 2 489 558
FR-A- 2 492 213

(73) Patentinhaber : **Siemens Aktiengesellschaft Berlin
und München**
**Wittelsbacherplatz 2**
**D-8000 München 2 (DE)**

(72) Erfinder : **Bergmiller, Walter**
**Asamstrasse 15**
**D-8032 Lochham (DE)**
Erfinder : **Ludwig, Max, Dipl.-Ing.(FH)**
**Am Kornacker 18d**
**D-8000 München 70 (DE)**

## Beschreibung

Die vorliegende Erfindung beinhaltet eine Vorrichtung zum Prüfen und Entwerten einer innerhalb eines Kartenlesers für Endgeräte, insbesondere Wertkartenfernsprecher, einführbaren und Werteinheiten enthaltenden Wertkarte mit folgenden Merkmalen :

— der Kartenleser weist einen Schlitz auf, durch den die Wertkarte in eine der Größe der Wertkarte entsprechende Kartenaufnahme einschiebbar ist ;

— die Kartenaufnahme ist so gestaltet, daß die Wertkarte durch sie geführt wird und an ihrer zur Einführungsrichtung senkrecht verlaufenden Kante von einem Ausschiebehaken berührt wird ;

— wie Kartenaufnahme ist mit der so gehaltenen Wertkarte durch eine Schwenkbewegung an ein dem Prüfen und Entwerten dienendes Kontaktelement heranführbar ;

— es sind Mittel vorgesehen, die durch eine Verklinkung die Schwenkbewegung erst dann ermöglichen, wenn die Wertkarte in die Kartenaufnahme weit gerug eingeführt ist ;

— die Kartenaufnahme ist nach erfolgter Schwenkbewegung in einer von der Einführlage abweichenden der Prüfung und Entwertung dienenden Stellung bis zum Ablauf der Entwertung mittels einer durch ein Magnetsystem betätigten Sperrvorrichtung arretierbar und anschließend über Federelemente in die Ausgangslage zurückführbar, wobei die Wertkarte nach erfolgter Entwertung durch den Ausschieberhaken aus dem Kartenleser ausgestoßen wird.

Eine derartige Vorrichtung ist durch die FR-A-2 492 213 bekannt.

Diese bekannte Vorrichtung weist jedoch den Nachteil auf, daß durch den frei zugänglichen Schlitz der Kartenaufnahme auch im Lesezustand der Karte Manipulationen an der Lese- und Auswerteeinrichtung vorgenommen werden können.

Aufgabe der vorliegenden Erfindung ist es daher, die bekannte Vorrichtung zum Prüfen und Entwerten von in Kartenlesern einführbaren Wertkarten dahingehend zu verbessern, daß betrügerische Manipulationen, die ohne das Einführen der Werkarte in den Kartenleser zu einer Dienstleistung führen können, völlig ausgeschlossen sind.

Gemäß der Erfindung wird diese Aufgabe dadurch gelöst, daß der Ausschieberhaken den einen Arm einer Transportschwinge bildet, dessen anderer Arm von zwei die Wertkarte an ihrer dem Ausschieberhaken gegenüberliegenden Kante umgreifenden Krallen gebildet wird, daß die Schwenkbewegung durch die Verklinkung der Transportschwinge mit einer Antriebsvorrichtung erfolgt, wobei die Wertkarte zuerst völlig in den Kartenleser eingezogen und der Schlitz durch einen Sperrschieber verschlossen wird, und dann die Schwenkbewegung durchgeführt wird.

Bei dieser erfindungsgemäßen Vorrichtung wird durch ein formschlüssiges Umgreifen der Wertkarte durch den Ausschieberhaken und die Krallen während ihrer Zuführung zur Prüf- und Entwertungseinrichtung stets eine exakte Führung der Wertkarte erreicht, wobei aufgrund des Verschwenkens der Kartenaufnahme ein Zugriff zu der Prüf- und Entwertungseinrichtung so gut wie unmöglich ist. Dünne mit der Wertkarte zum Zweck des Betrügens verbundene Leiter werden bei der Schwenkbewegung der Kartenaufnahme zusammen mit der Schließbewegung des Sperrschiebers abgeschert bzw. abgerissen. Die Prüf- und Entwertungseinrichtung ist ebenfalls nicht direkt über den Schlitz zugänglich, so daß auch durch diese Lage der Entwertungseinrichtung ein direkter Zugriff nicht möglich ist.

Die zuvor erwähnte Transportschwinge besteht zweckmäßigerweise aus zwei bogenförmigen Krallen, zumindest einem bogenförmigen Ausschieberhaken, einer Stange, einem Rastblech, einem Anschlag und einer Kurvenscheibe, wobei diese Teile fest miteinander verbunden und die Transportschwinge und die Kartenaufnahme auf einer gemeinsamen Drehachse schwenkbar gelagert sind. Hierbei stellt der genannte Anschlag die Ausgangs- und Endlage der Transportschwinge zur Kartenaufnahme dar.

Dabei kann die Transportschwinge und die Kartenaufnahme durch auf der Drehachse angeordnete Spiralfedern in Richtung der Ausgangslage gedrückt werden. Die zuvor erwähnte Stange an der Transportschwinge greift in Längsschlitze des Sperrschiebers ein, wobei die Drehbewegung der Transportschwinge in eine geradlinige Bewegung des Sperrschiebers umgesetzt wird.

Um die Kartenaufnahme und den Schlitz in eine Fluchtlinie zueinander zu bringen, ist die Kartenaufnahme mittels eines auf sie einwirkenden verstellbaren Stiftes justierbar. Dabei können Schlitz und Kartenaufnahme so innerhalb des Kartenlesers angeordnet sein, daß sie eine nach außen hin abfallende Ebene bilden. Dadurch wird in einfacher Weise das Eindringen von Verunreinigungen bewirkendem Wasser und Staub verhindert.

Da, wie bereits zuvor erwähnt, die Wertkarte zu Beginn des Schwenkvorganges zwischen den Krallen und dem Ausschieberhaken so weit relativ zur Kartenaufnahme verschoben wird, bis eine endgültige der Prüfung und Entwertung dienende Lage der Wertkarte auf der Kartenaufnahme erreicht ist, bedarf es eines weiteren Anschlages, mit dem die Kartenaufnahme über die Transportschwinge der Prüf- und Entwertungseinrichtung zugeführt wird. Dabei kann ein Verschwenken von zunächst der Transportschwinge und anschließend der Kartenaufnahme und der Transportschwinge über einen von außen am Endgerät angeordneten und betätigbaren Transporthebel erfolgen.

Die der Ver- und Entriegelung dienende Anordnung kann im wesentlichen aus einem elektrisch steuerbaren Relais, einem durch die Kurvenscheibe steuerbaren Sperrhebel sowie einer die Ver- und Entklinkung bewirkenden Einrichtung bestehen, wobei die der Ver- und Entklinkung dienende Einrichtung durch das Rastblech und den auf das Rastblech einwirkenden Mitnehmerhaken gebildet ist. Dabei ist der senkrecht zu seiner Schwenkrichtung bewegliche und durch Federkraft beaufschlagte Mitnehmerhaken durch den von außen zugänglichen transporthebel betätigbar und das Rastblech und der Mitnehmerhaken sind jeweils nach Lage der Wertkarte und durch den abgehobenen oder aufgelegten Hörer durch ein Schaltglied getrennt oder miteinander verbunden. Das erwähnte Schaltglied kann dabei so gestaltet sein, daß es als schwenkbare Schaltstange ausgebildet ist, die im Bereich des Mitnehmerhakens eine Auflaufschräge aufweist und auf der der Auflaufschräge abgewandten Fläche durch ein leitungsgespeistes bistabiles Relais steuerbar ist. Die mit der Transportschwinge fest verbundene Kurvenscheibe wirkt dabei auf ein Steuerglied des Sperrshebels ein, wobei der Sperrhebel eine muldenförmige Aufnahme besitzt, mit der ein abgebogener Ansatz des Ankers des bistabilen Relais zusammenarbeitet. Hierbei kann der Anker des bistabilen Relais einerseits mit dem abgebogenen Ansatz mit dem Sperrhebel zusammenarbeiten und andererseits die schwenkbare Schalstange betätigen. Dadurch genügt zur Steuerung des bistabilen Relais bei Wertkartenfernsprechern bereits die im Fernsprechnetz vorhandene Spannung, so daß auf eine aufwendige Fremdspeisung verzichtet werden kann. Der Anker dieses bistabilen Relais übernimmt neben seinen zwei aufgrund der elektrischen Umschaltung erzwungenen stabilen Lagen außerdem mechanische Steuerfunktionen, die eine Ver- und Entklinkung des Transportmechanismusses bewirken.

Um einen gleichmäßigen Ablauf der Transportmechanismusses während der Hinführens der Wertkarte zu der bzw. Wegführens von der Prüf- und Entwertungseinrichtung zu erreichen, wird dieser Ablauf in einer bevorzugten Ausführung durch einen über die Drehachse angetriebenen Fliehkraftregler verzögert.

Die Erfindung soll im folgenden anhand eines Ausführungsbeispiels näher erläutert werden.

Es zeigt

Fig. 1 bis Fig. 4 die Funktion des Kartenlesers in verschiedenen Lagen der in ihr eingeführten Wertkarte,

Fig. 5 bis Fig. 10 die Ver- und Entriegelungsvorrichtung des Kartenlesers in verschiedenen Positionen.

Der dargestellte in einem Wertkartenfernsprecher zur Anwendung gelangende Kartenleser 1 setzt sich im wesentlichen aus der Transportschwinge 2, der Kartenaufnahme 3 und dem Sperrschieber 4 zusammen. Dabei besteht die Transportschwinge 2 aus den bogenförmigen Krallen 5, dem bogenförmigen Ausschieberhaken 6, der Stange 7 dem Rastblech 8, wobei diese Teile fest miteinander verbunden sind.

Die Transportschwinge 2 und die Kartenaufnahme 3 sind verschwenkbar auf der gemeinsamen Drehachse 9 angeordnet. Die Transportschwinge 2 kann dabei relativ zur Kartenaufnahme 3 in einem Bereich verschwenkt werden, der durch die Anschläge 10 und 11 begrenzt ist. Durch diesen schwenkbaren Bereich wird gewährleistet, daß die Karte 12 durch die jeweils bogenförmig gestalteten Krallen 5 und den Ausschieberhaken 6 nach ihrem Einschieben in den Schlitz 13 umfaßt wird, ohne daß die Kartenaufnahme verschwenkt wird. Andererseits wird dadurch die Wertkarte bei rückläufiger Bewegung der Transportmechanik durch den Ausschieberhaken 6 soweit aus dem Schlitz 13 herausgedrückt, daß die Wertkarte vom Benutzer gegriffen und aus dem Kartenleser herausgezogen werden kann.

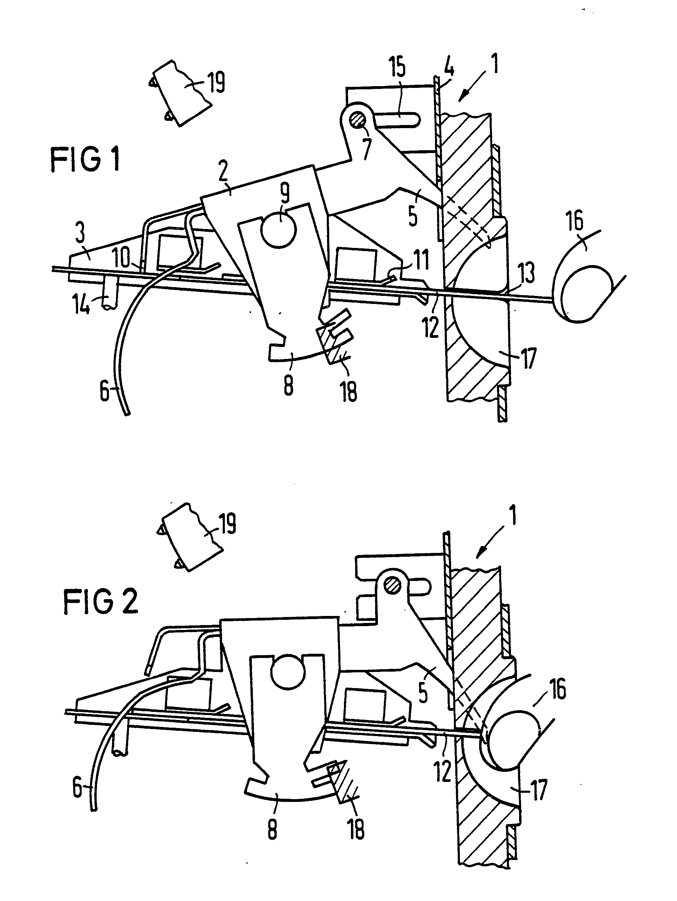

Die fluchtende Lage der Kartenaufnahme 3 zum Schlitz 13 wird dabei durch einen verstellbaren Stift 14 erreicht, wobei dieser Stift 14 als Schraube ausgebildet sein kann. Dabei sind die Kartenaufnahme und der Schlitz zum Benutze geneigt angeordnet, um ein Eindrigen von Staub und Feuchtigkeit zu verhindern. Auf der Drehachse 9 sind ferner zwei hier nicht dargestellte Spiralfedern mit unterschiedlicher Federkraft angeordnet, die gegeneinander wirken. Dabei wird in der Ausgangsstellung die Kartenaufnahme 3 aufgrund der eine höhere Federkraft besitzenden Spiralfeder gegen den Stift 14 gedrückt, wobei die Transportschwinge mit ihrem Anschlag 10 auf der Kartenaufnahme 3 aufliegt (Fig. 1).

Durch die in den Längsschlitz 15 des Sperrschiebers 4 eingreifende Stange 7 wird die Schwenkbewegung der Transportschwinge 2 in eine geradlinige Bewegung des Sperrschiebers 4 umgesetzt.

Im folgenden soll die Funktion des Kartenlesers erläutert werden.

Bei der in Fig. 1 dargestellten Ausgangslage wird die Wertkarte 12 in den Schlitz 13 eingesteckt und ohne spürbare Gegenkraft so weit durch den Schlitz 13 in die Kartenaufnahme 3 durch den Finger 16 des Benutzers eingeschoben, bis die dem Finger 16 abgewandte Kartenkante an dem Ausschieberhaken 6 anliegt. Wird nun in dieser Lage die Wertkarte 12 gegen den Widerstand der stärkeren Spiralfeder weiter in die Griffmulde 17 eingedrückt, so wird aufgrund des bogenförmigen Ausschieberhakens 6 bei feststehender Kartenaufnahme die Transportschwinge 2 in die in Fig. 2 gezeigte Lage gedreht. In dieser Lage wird die Wertkarte 12 sowohl von den Krallen 5 als auch von dem Ausschieberhaken 6 in Einschiebrichtung umgriffen, so daß ein Entfernen der Wertkarte 12 aus dem Kartenleser 1 nicht mehr möglich ist.

Bei abgenommenem Hörer verklinkt der Mitnehmerhanken 18 mit dem Rastblech 8, d. h. die Transportschwinge 2 hat eine stabile Zwischenlage eingenommen. Nun wird der Mitnehmerhaken 18 über einen von außen Zugänglichen und hier nicht gezeigten Transporthebel betätigt, wobei im verklinkten Zustand zunächst die Transportschwinge 2 in Pfeilrichtung A und später auch die Kartenaufnahme 3 verschwenkt werden.

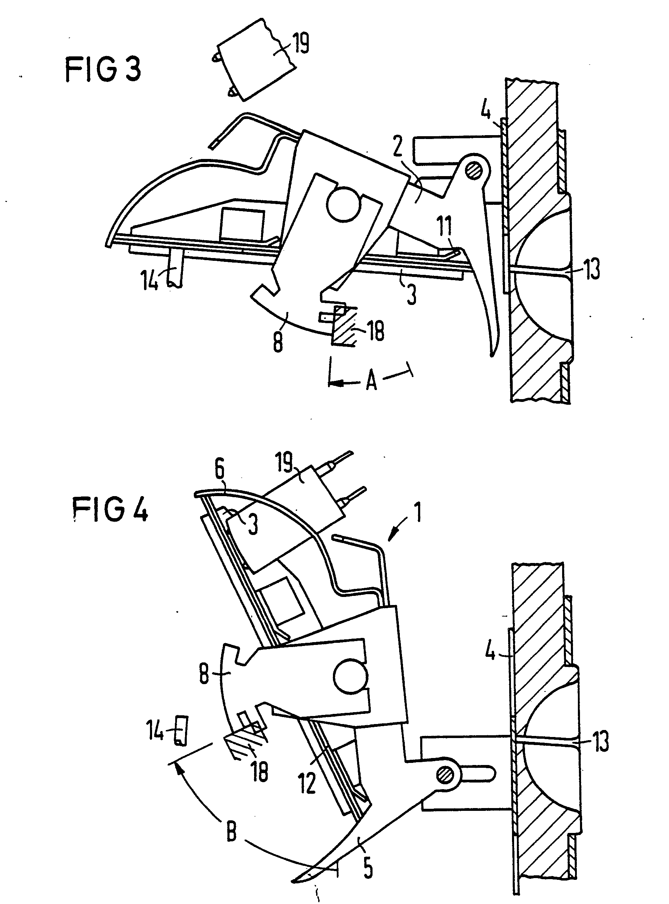

Ein Teil dieser Schwenkbewegung ist in Fig. 3 dargestellt. Hierbei gelangt die Transportschwinge 2 an dem mit der Kartenaufnahme 3 fest verbundenen Anschlag 11 zur Anlage. Bei weiterer Bewegung des von außen zugänglichen Transporthebels in Pfeilrichtung B wird die Transportschwinge 2 gemeinsam mit der Kartenaufnahme 3 verschwenkt, d. h., die Kartenaufnahme 3 wird von dem Stift 14 in die in Fig. 4 dargestellte Stellung wegbewegt. Die Wertkarte 12 liegt in diesem Zustand mit auf ihr angeordneten Kontaktpunkten an einem federnde Kontaktstifte aufweisenden Kontaktelement 19 an. In dieser Stellung wird die Wertkarte überprüft und bei Vorhandensein von gespeicherten Werteinheiten eine Abbuchung über entsprechende in dem Endgerät angeordnete Vorrichtungen vorgenommen. Aufgrund der federnden Ausbildung der Kontaktstifte und der unterschiedlichen Bewegungsrichtung der Kontaktstifte zu der herangeführten Wertkarte findet eine geringe Reibung zwischen den Kontaktstiften und den Kontaktpunkten auf der Wertkarte statt, so daß stets eine sicherer Kontaktgabe zwischen diesen genannten Teilen erzielt wird.

Mittels des von außen zugänglichen Transporthebels wird ebenfalls der Sperrschieber 4 bewegt, so daß er — wie in Fig. 4 gezeigt — den Schlitz 13 von innen verschließt und somit von außen keine Manipulationen am Kartenleser vorgenommen werden können.

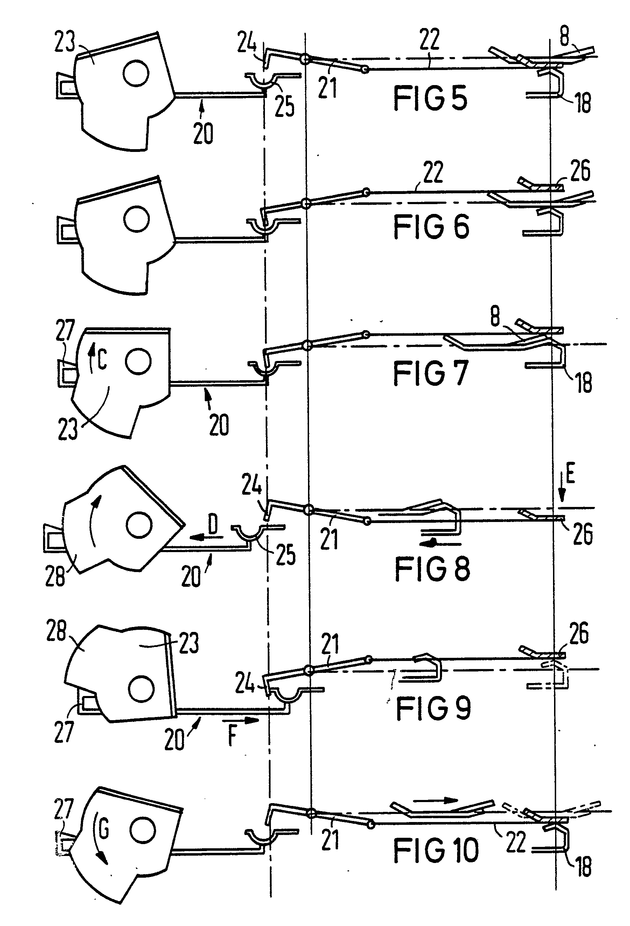

Anhand der Fig. 5 bis 10 ist die Ver- und Entriegelung der Transportmechanik sowie verschiedene Schaltstellungen eines leitungsgespeisten bistabilen Relais dargestellt.

Die hier gezeigten Teile sind nur symbolisch dargestellt. Hierbei ist mit 20 der Sperrhebel, 21 das bistabile Relais, 22 die Schaltstange, 8 das Rastblech, 18 der Mitnehmerhaken und mit 23 die Kurvenscheibe bezeichnet. Dabei ist das Rastblech 8 und die Kurvenscheibe mit der Transportschwinge 2 fest verbunden.

Bei der in Fig. 5 gezeigten Ausgangsstellung, die der Stellung der Transportmechanik in Fig. 1 entspricht, befinden sich der Mitnehmerhaken und das Rastblech 8 in einem räumlich getrennten Zustand, d. h. es besteht kein verklinkter Zustand zwischen diesen beiden Teilen. Dabei liegt die über das Relais 21 und die Schaltstange 22 betätigbare Anlaufschräge 26 etwa in der Ebene des Rastbleches 8 und der durch das Relais 21 betätigte abgebogene Ansatz 24 des Ankers befindet sich außerhalb einer muldenförmigen Aufnahme 25 des Sperrhebels 20.

In Fig. 6 ist eine Stellung bei abgenommenen Hörer dargestellt. In diesem Zustand schaltet das bistabile Relais 21 elektrisch um und betätigt die Schaltstange 22. Dadurch wird die Auflaufschräge 26 der Schaltstange 22 von dem Mitnehmerhaken 18, der nun an der Fläche des Rastbleches 8 anliegt, wegbewegt, was eine Voraussetzung für die spätere Verklinkung des Mitnehmerhakens 18 mit dem Rastblech 8 bildet. Der Ansatz 24 des Ankers des bistabilen Relais 21 fällt dabei in die Aufnahme 25 des Sperrhebels 20 ein. Wird, wie der Beschreibung zu Fig. 2 zu entnehmen ist, die Wertkarte 12 soweit eingeschoben, daß sie durch die Krallen 5 und den Ausschieberhaken 6 umfaßt wird, so ist die in Fig. 7 gezeigte Stellung erreicht.

In dieser Stellung hat die Wertkarte den Ausschieberhaken 6 und damit auch das Rastblech 8 um einen geringen Winkelbetrag in Pfeilrichtung C soweit verschwenkt, daß der Mitnehmerhaken 18 und das Rastblech 8 miteinander verklinken. Dabei bewegt sich das Steuerglied 27 des Sperrhebels 20 auf der Steuerkurve der Kurvenscheibe 23.

In der in Fig. 8 gezeigten Stellung läuft bei weiterer Verschwenkung mittels des von außen zugänglichen transporthebels das Steuerglied auf den Nocken 28 der Kurvenscheibe 23 auf, wobei aufgrund einer Längsverschiebung des Sperrhebels 20 in Pfeilrichtung D der Ansatz 24 aus der muldenförmigen Aufnahme 25 herausbewegt wird. Das Relais 21 wird dabei durch mechanisches Umschalten in seine Ausgangslage zurückgeführt. Auch die Auflaufschräge 26 der Schaltstange 22 wird bei diesem Vorgang in Richtung des Pfeiles E in ihre Ausgangslage zurückgeführt. Dieses Zurückführen ist möglich und führt zu keinem Lösen der Verklinkung, weil der Mitnehmerhaken 18 und das Rastblech 8 bereits von der Auflaufschräge 26 weggedreht haben.

Die in Fig. 9 gezeigte Stellung ist mit der in Fig. 4 gezeigten Endlage der Transportmechanik identisch. Hierbei liegt das Steuerglied 27 des Sperrhebels 20 hinter dem Nocken 28 der kurvenscheibe 23, also auf dem kleinsten Radius der Kurvenscheibe. Dadurch wird der Sperrhebel 20 in Pfeilrichtung F verschoben. Gleichzeitig schaltet über einen Mikroschalter das Relais 21 elektrisch um, wobei der Ansatz 24 des Ankers die muldenförmige Aufnahme 25 übergreift und somit die Transportmechanik wegen der Rastverbindung zwischen Ansatz 24 und der Aufnahme 25 sowie zwischen dem Steuerglied 27 und dem Nocken 28 eine dem Prüfen und Entwerten dienende stabile Stellung einnimmt. In dieser Lage kann der von außen betätigbare Transporthebel vom Benutzer freigegeben werden und kehrt in seine Ausgangslage zurück.

In der in Fig. 10 gezeigten Stellung ist das Gespräch durch Einhängen des Hörers beendet. Das Relais 21 schaltet elektrisch um, wodurch die Verrastung zwischen dem Ansatz 24 und dem Sperrhebel 20 aufgehoben wird. Die Transportmechanik schwenkt in Pfeilrichtung G durch Federkraft in die Grundstellung (Fig. 5) zurück. Dabei wurde bereits durch das Relais 21, die Schaltstange 22 und die Auflaufschräge 26 der Mitnehmerhaken 18 aus der Eingriffsebene des Rastbleches 8 gebracht, das ohne zu Verklinken am Mitnehmerhaken 18 vorbei in die Anfangsstellung entsprechend Fig. 5 zurückdrehen kann.

Bei nicht abgehobenem Hörer in Stellung Fig. 5 bzw. wieder eingehängtem Hörer nach Stellung Fig. 6 findet keine Verklindung von Rastblech 8 Mitnehmerhaken 18 statt bzw. die Verklinkung wird wegen des Zurückschaltens des Relais 21 in Grundstellung Fig. 5 wieder gelöst. Dadurch kann die karte jederzeit vom Benutzer wieder dem Gerät entnommen werden, da sie durch den Ausschieberhaken 6 mittels Federkraft aus dem Schlitz 13 herausgedrückt wird.

Um ein bestehendes Gespräch bei einer nahezu abgebuchten Wertkarte mittels einer zweiten Wertkarte weiterführen zu können, ist an dem Endgerät eine hier nicht gezeigte Taste angeordnet, durch die das Signal « Hörer einhängen » simuliert wird. Dadurch kann der gleiche in Fig. 10 bewirkt werden. Dabei kehrt die abgebuchte Wertkarte in die Ausgangsstellung gemäß Fig. 5 zurück und kann dem Gerät entnommen werden. Durch Vorgabe einer Zeitkonstante, die einen sicheren Rücklauf in die Ausgangsstellung gewährleisten muß, wird anschließend durch ein gesondertes Signal des bistabile Relais umgeschaltet und dadurch das Signal « Hörer abnehmen » simuliert. Damit wird der in Fig. 6 gezeigte Zustand erreicht, in dem die zweite Wertkarte eingeschoben werden kann und die in den nachfolgenden Fig. 7 bis 9 gezeigten Lagen eingenommen werden können.

Bezugszeichenliste

1  Kartenleser
2  Transportschwinge
3  Kartenaufnahme
4  Sperrschieber
5  Kralle
6  Ausschieberhaken
7  Stange
8  Rastblech
9  Drehachse
10 Anschlag
11 Anschlag
12 Wertkarte
13 Schlitz
14 Stift
15 Längsschlitz
16 Finger
17 Griffmulde
18 Mitnehmerhaken
19 Kontaktelement
20 Sperrhebel
21 bistabiles Relais
22 Schaltstange
23 Kurvenscheibe
24 Ansatz
25 Aufnahme
26 Auflaufschräge
27 Steuerglied
28 Nocken

**Patentansprüche**

1. Vorrichtung zum Prüfen und Entwerten einer innerhalb eines Kartenlesers (1) für Endgeräte, insbesondere Wertkartenfernsprecher, einführbaren und Werteinheiten enthaltenden Wertkarte (12) mit folgenden Merkmalen :
— der Kartenleser (1) weist einen Schlitz (13) auf, durch den die Wertkarte (12) in eine der Größe der Wertkarte (12) entsprechende Kartenaufnahme (3) einschiebbar ist ;
— die Kartenaufnahme (3) ist so gestaltet, daß die Wertkarte (12) durch sie geführt wird und an ihrer zur Einführungsrichtung senkrecht verlaufenden Kante von einem Ausschiebehaken (6) berührt wird ;
— die Kartenaufnahme (3) ist mit der so gehaltenen Wertkarte (12) durch eine Schwenkbewegung an ein dem Prüfen und Entwerten dienendes Kontaktelement (19) heranführbar ;
— es sind Mittel vorgesehen, die durch eine Verklinkung die Schwenkbewegung erst dann ermöglichen, wenn die Wertkarte (12) in die Kartenaufnahme (3) weit genug eingeführt ist ;
— die Kartenaufnahme (3) ist nach erfolgter Schwenkbewegung in einer von der Einführlage abweichenden der Prüfung und Entwertung dienenden Stellung bis zum Ablauf der Entwertung mittels einer durch ein Magnetsystem betätigten Sperrvorrichtung (20, 21, 22) arretierbar und anschließend über Federelemente in die Ausgangslage zurückführbar, wobei die Wertkarte (12) nach erfolgter Entwertung durch den Ausschieberhaken (6) aus dem Kartenleser (1) ausgestoßen wird, dadurch gekennzeichnet, daß der Ausschieberhaken (6) den, einen Arm einer Transportschwinge (2) bildet, dessen anderer Arm von zwei die Wertkarte (12) an ihrer dem Ausschieberhaken (6) gegenüberliegenden Kante umgreifenden Krallen (5) gebildet wird, daß die Schwenkbewegung durch die Verklinkung der Transportschwinge (2) mit einer Antriebsvorrichtung erfolgt, wobei die Wertkarte (12) zuerst völlig in den Kartenleser (1) eingezogen und der Schlitz (13) durch einen Sperrschieber (4) verschlossen wird, und dann die Schwenkbewegung durchgeführt wird.

2. Vorrichtung nach Anspruch 1, dadurch gekennzeichnet, daß die Transportschwinge (2) aus zwei bogenförmigen Krallen (5), zumindest einem bogenförmigen Ausschieberhaken (6), einer Stange (7), einem Rastblech (8), einem Anschlag (10) und einer Kurvenscheibe (23) besteht, wobei diese Teile fest miteinander verbunden sind.

3. Vorrichtung nach Anspruch 1, dadurch gekennzeichnet, daß die Transportschwinge (2) und die Kartenaufnahme (3) auf einer gemeinsamen Drehachse (9) schwenkbar gelagert sind.

4. Vorrichtung nach Anspruch 1 oder 3, dadurch gekennzeichnet, daß sowohl die Transportschwinge (2) als auch die Kartenaufnahme (3) durch auf der Drehachse (9) angeordnete Spiralfedern in Richtung der Ausgangslage gedrückt werden.

5. Vorrichtung nach Anspruch 2, dadurch gekennzeichnet, daß die Stange (7) in Längsschlitze (15) des Sperrschiebers (4) eingreift.

6. Vorrichtung nach Anspruch 1, dadurch gekennzeichnet, daß die Kartenaufnahme (3) mittels eines auf sie einwirkenden verstellbaren Stiftes (14) justierbar ist.

7. Vorrichtung nach Anspruch 1, dadurch gekennzeichnet, daß in der Ausgangslage die Transportschwinge (2) mit dem Anschlag (10) an der Kartenaufnahme (3) anliegt (Fig. 1).

8. Vorrichtung nach Anspruch 1, dadurch gekennzeichnet, daß die Transportschwinge (2) zur Kartenaufnahme (3) um einen bestimmten Winkel (Pfeil Richtung A, Fig. 3) verschwenkbar ist, wobei die Schwenkbewegung der Transportschwinge (2) durch einen auf der Kartenaufnahme (3) angeordneten Anschlag (11) begrenzt ist.

9. Vorrichtung nach Anspruch 1, dadurch gekennzeichnet, daß die der Ver- und Entriegelung dienende Anordnung im wesentlichen aus einem elektrisch steuerbaren Relais (21), einem durch die Kurvenscheibe (23) steuerbaren Sperrhebel (20) sowie einer die Ver- und Entklinkung bewirkenden Einrichtung besteht.

10. Vorrichtung nach Anspruch 9, dadurch gekennzeichnet, daß die der Ver- und Entklinkung dienende Einrichtung durch das Rastblech (8) und den auf das Rastblech einwirkenden Mitnehmerhaken (18) gebildet ist, wobei der senkrecht zu seiner Schwenkrichtung bewegliche und durch Federkraft beaufschlagte Mitnehmerhaken (18) durch einen von außen zugänglichen Transporthebel betätigbar ist, und daß das Rastblech (8) und der Mitnehmerhaken (18) jeweils nach Lage der Wertkarte (12) durch ein Schaltglied getrennt oder verbunden sind.

11. Vorrichtung nach Anspruch 10, dadurch gekennzeichnet, daß das Schaltglied als schwenkbare Schaltstange (22) ausgebildet ist, die im Bereich des Mitnehmerhakens (18) eine Auflaufschräge (26) aufweist und auf der der Auflaufschräge (26) abgewandten Fläche durch ein leitungsgespeites bistabiles Relais (21) steuerbar ist.

12. Vorrichtung nach Anspruch 2, 9 und 11, dadurch gekennzeichnet, daß die Kurvenscheibe (23) auf ein Steuerglied (27) des Sperrhebels (20) einwirkt, wobei der Sperrhebel (20) eine muldenförmige Aufnahme (25) aufweist, mit der ein abgebogener Ansatz (24) des Ankers des bistabilen Relais (21) zusammenarbeitet.

13. Vorrichtung nach Anspruch 11 und 12, dadurch gekennzeichnet, daß der Anker des bistabilen Relais (21) einerseits mit dem abgebogenen Ansatz mit dem Sperrhebel (20) zusammenarbeitet und andererseits die schwenkbare Schaltstange (22) betätigt.

14. Vorrichtung nach Anspruch 1, dadurch gekennzeichnet, daß die Hinführung der Kartenaufnahme (3) in die Prüf- und Entwertungsstellung sowie deren Rückführung in Richtung der Ausgangslage durch einen über die Drehachse (9) angetriebenen Fliehkraftregler verzögert wird.

## Claims

1. A device for the checking and cancellation of a value card (12) insertable in a card reader (1) for terminal equipment, especially card-operated telephones, and containing value units, having the following features :

the card reader (1) has a slot (13), through which the value card (12) can be pushed into a card receptacle (3) corresponding to the size of the value card (12) ;

the card receptacle (3) is designed so that the value card (12) is guided by it and, at its edge extending perpendicularly relative to the direction of insertion, is touched by a push-out hook (6) ;

the card receptacle (3), together with the value card (12) so retained, can, as a result of a pivoting movement, be brought up to a contact element (19) serving for checking and cancellation ;

there are means which, as a result of interlocking, allow the pivoting movement only when the value card (12) is inserted far enough into the card receptacle (3) ;

after the pivoting movement has been executed, the card receptacle (3) can be stopped, by means of a blocking device (20, 21, 22) actuated by a magnet system, in a position differing from the insertion position and serving for checking and cancellation, up to the completion of cancellation, and can subsequently be returned to the initial position via spring elements, the value card (12) being ejected from the card reader (1) by the push-out hook (6) after cancellation has taken place, characterised in that the push-out hook (6) forms one arm of a transport rocker (2), the other arm of which is formed by two claws (5) engaging round the value card (12) at its edge located opposite the push-out hook (6), and in that the pivoting movement takes place as a result of the interlocking of the transport rocker (2) with a drive device, the value card (12) first being drawn into the card reader (1) completely and the slot (13) being closed by means of a blocking slide (4), and then the pivoting movement taking place.

2. A device according to Claim 1, characterised in that the transport rocker (2) consists of two arcuate claws (5), at least one arcuate push-out hook (6), a rod (7), an engagement plate (8), a stop (10) and a cam disc (23), these parts being connected firmly to one another.

3. A device according to Claim 1, characterised in that the transport rocker (2) and the card receptacle (3) are mounted pivotably on a common rotary axle (9).

4. A device according to Claims 1 or 3, characterised in that both the transport rocker (2) the card receptacle (3) are pressed in the direction of the initial position by means of helical springs arranged on the rotary axle (9).

5. A device according to Claim 2, characterised in that the rod (7) engages into longitudinal slots (15) in the blocking slide (4).

6. A device according to Claim 1, characterised in that the card receptacle (3) can be adjusted by means of an adjustable pin (14) acting on it.

7. A device according to Claim 1, characterised in that, in the initial position, the transport rocker (2) rests against the card receptacle (3) by means of the stop (10) (Figure 1).

8. A device according to Claim 1, characterised in that the transport rocker (2) is pivotable through a specific angle relative to the card receptacle (3) (the direction of the arrow A in Figure 3), the pivoting movement of the transport rocker (2) being limited by a stop (11) arranged on the card receptacle (3).

9. A device according to Claim 1, characterised in that the arrangement serving for interlocking and release consists essentially of an electrically controllable relay (2), a detent lever (20) controllable by means of the cam disc (23) and a mechanism causing interlocking and release.

10. A device according to Claim 9, characterised in that the mechanism serving for interlocking and release is formed by the engagement plate (8) and the driving hook (18) acting on the engagement plate, the driving hook (18) movable perpendicularly relative to its pivoting direction and subjected to spring force being actuable by means of a transport lever accessible from outside, and in that the engagement plate (8) and the driving hook (18) are separated from one another or connected by means of a shift member, depending on the position on the value card (12).

11. A device according to Claim 10, characterised in that the shift member is designed as a pivotable shift rod (22) which has a run-on slope (26) in the region of the driving hook (18) and which, on the surface facing away from the run-on slope (26), can be controlled by a line-supplied bistable relay (21).

12. A device according to Claims 2, 9 and 11, characterised in that the cam disc (23) acts on a control member (27) of the detent lever (20), the detent lever (20) having a through-shaped receptacle (25), with which a bent extension (24) or the armature of the bistable relay (21) interacts.

13. A device according to Claims 11 and 12, characterised in that the armature of the bistable relay (21) on the one hand interacts with the detent lever (20) by means of the bent extension and on the other hand actuates the pivotable shift rod (22).

14. A device according to Claim 1, characterised in that the bringing of the card receptacle (3) into the checking and cancellation position and its return in the direction of initial position are delayed by means of a centrifugal governor driven via the rotary axle (9).

**Revendications**

1. Procédé pour contrôler et effectuer des opérations de débit sur une carte à mémoire (12) pouvant être insérée dans un lecteur de cartes (1) pour des appareils terminaux, notamment des téléphones fonctionnant avec des cartes à mémoire, et comportant des unités de compte, présentant les caractéristiques suivantes :

le lecteur de cartes (1) comporte une fente (13), dans laquelle la carte à mémoire (12) peut être insérée dans un logement (3) correspondant aux dimensions de la carte à mémoire (12) ;

le logement (3) recevant la carte est agencé de telle sorte qu'on introduit dans ce logement la carte à mémoire (12), qui vient en contact, au niveau de son bord perpendiculaire à la direction d'insertion, avec un crochet d'expulsion (6) ;

le logement (3) recevant la carte et contenant la carte à mémoire (12) ainsi maintenue, peut être rapproché, au moyen d'un mouvement de pivotement, d'un élément de contact (19) utilisé pour exécuter le contrôle et l'opération de débit ;

il est prévu des moyens permettant, sous l'effet d'un encliquetage, le mouvement de pivotement uniquement lorsque la carte à mémoire (12) est insérée suffisamment profondément dans le logement (3) recevant la carte ;

le logement (3) recevant la carte peut être bloqué, après l'exécution d'un mouvement de pivotement, dans une position écartée de la position d'insertion et utilisée pour contrôler l'opération de débit, et ce jusqu'à l'exécution de l'opération de débit, au moyen d'un dispositif de blocage (20, 21, 22) actionné par un système magnétique, et peut être ramené ensuite, au moyen d'éléments de ressorts, dans la position initiale, la carte à mémoire (12) étant éjectée hors du lecteur de cartes (1) par le crochet d'expulsion (6), une fois l'opération de débit exécutée, caractérisé par le fait que le crochet d'expulsion (6) constitue un bras d'une bielle oscillante (2), dont l'autre bras est formé par deux griffes (5) enserrant la carte à mémoire (12) au niveau de son bord situé à l'opposé du crochet d'expulsion (6), que le mouvement de pivotement est exécuté au moyen de l'encliquetage de la bielle oscillante de transport (2) avec un dispositif d'entraînement, auquel cas la carte à mémoire (12) est introduite tout d'abord complètement dans le lecteur de cartes (1) et la fente (13) est fermée par un coulisseau de blocage (4), et le mouvement de pivotement est alors exécuté.

2. Dispositif suivant la revendication 1, caractérisé par le fait que la bielle oscillante de transport (2) est formée par deux griffes en forme d'arcs de cercle (5), au moins un crochet d'extraction (6) en forme d'arc de cercle, une tige (7), une tôle d'encliquetage (8), une butée (10) et un disque à came (23), ces éléments étant reliés rigidement entre eux.

3. Dispositif suivant la revendication 1, caractérisé par le fait que la bielle oscillante de transport (2) et le logement (3) recevant la carte sont montés de manière à pouvoir pivoter sur un axe de rotation commun (9).

4. Dispositif suivant la revendication 1 ou 3, caractérisé par le fait qu'aussi bien la bielle oscillante de transport (2) que le logement (3) recevant la carte sont repoussés en direction de la position initiale par des ressorts spiraux disposés sur l'axe de rotation (9).

5. Dispositif suivant la revendication 2, caractérisé par le fait que la tige (7) s'engage dans des fentes longitudinales (15) du coulisseau de blocage (4).

6. Dispositif suivant la revendication 1, caractérisé par le fait que le logement (3) recevant la carte peut être ajusté à l'aide d'une tige mobile (14) agissant sur ce logement.

7. Dispositif suivant la revendication 1, caractérisé par le fait que dans la position initiale, la bielle oscillante de transport (2) s'applique au moyen de la butée (10) contre le logement (3) recevant la carte (figure 1).

8. Dispositif suivant la revendication 1, caractérisé par le fait que la bielle oscillante de transport (2) peut pivoter par rapport au logement (3) recevant la carte, sur un angle déterminé (flèche direction A, figure 3), le mouvement de pivotement de la bielle oscillante de transport (2) étant limité par une butée (11) disposée sur le logement (3) recevant 1 carte.

9. Dispositif suivant la revendication 1, caractérisé par le fait que le dispositif, utilisé pour le verrouillage et le déverrouillage est constitué essentiellement par un relais (21) pouvant être commandé électriquement, par un levier de blocage (20) pouvant être commandé par le disque à came (23) ainsi que par un dispositif réalisant l'encliquetage et le désencliquetage.

10. Dispositif suivant la revendication 9, caractérisé par le fait que le dispositif utilisé pour réaliser l'encliquetage et le désencliquetage est formé par la tôle d'encliquetage (8) et par le crochet d'entraînement (18) agissant sur cette tôle, le crochet d'entraînement (18) déplaçable perpendiculairement à sa direction de pivotement et chargé par la force d'un ressort pouvant être actionné par un levier de transport accessible de l'extérieur, et que la tôle d'encliquetage (8) et le crochet d'entraînement (18) sont séparés ou reliés, en fonction de la position de la carte à mémoire (12), par un organe de commutation.

11. Dispositif suivant la revendication 10, caractérisé par le fait que l'organe de commutation est réalisé sous la forme d'une barre de commutation pivotante (22) qui possède une rampe de montée (26), au voisinage du crochet d'entraînement (18) et peut être commandé, au niveau de sa surface tournée à l'opposé de la rampe de montée (26), par un relais bistable (21) alimenté par le réseau.

12. Dispositif suivant les revendications 2, 9 et 11, caractérisé par le fait que le disque à came (23) agit sur un organe de commande (27) du levier de blocage (20), le levier de blocage (20) possédant un réceptacle (25) en forme d'auge, avec lequel coopère un appendice saillant replié (24) de l'armature du relais bistable (21).

13. Dispositif suivant les revendications 11 et 12, caractérisé par le fait que l'armature du relais bistable (21) d'une part coopère, au moyen de l'appendice saillant coudé, avec le levier de blocage (20) et d'autre part actionne la barre de commutation pivotante (22).

14. Dispositif suivant la revendication 1, caractérisé par le fait que la venue du logement (3) recevant la carte, dans la position de contrôle et de débit ainsi que son retour en direction de la position initiale sont retardés par un régulateur centrifuge entraîné par l'intermédiaire de l'axe de rotation (9).

0 156 972

FIG 1

FIG 2

FIG 3

FIG 4

FIG 5

FIG 6

FIG 7

FIG 8

FIG 9

FIG 10